# EUROPÄISCHE PATENTANMELDUNG

(11) **EP 0 565 516 A1**
(43) Veröffentlichungstag der Anmeldung: **13.10.1993**
(21) Anmeldenummer: 93890077.6
(22) Anmeldetag: 08.04.1993
(51) Int. Cl.: B66B 9/00, B66B 9/02, B66B 5/02, B66B 17/12

(54) **Aufzug**

(30) Priorität: 09.04.1992 AT 752/92; 19.08.1992 AT 1670/92
(71) Anmelder: Hagel, Werner, Mag. Dr., A-1140 Wien (AT)
(72) Erfinder: Hagel, Werner, Mag. Dr., A-1140 Wien (AT)
(74) Vertreter: Barger, Werner, Dipl.-Ing.

(57) **Zusammenfassung**

s7 Die Erfindung betrifft einen Aufzug mit einer Kabine (1), die entweder mittels eines über zumindest eine ortsfeste Umlenkrolle (5) geführten Seiles (2) mit einem Gegengewicht (3) verbunden ist und/oder bei dem die Kabine (1) mit einem endlosen Seil (14) verbunden ist, das über zumindest zwei ortsfeste Umlenkrollen (17,18) geführt ist, wobei in beiden Fällen der Antrieb beweglich angeordnet ist.

Die Erfindung ist dadurch gekennzeichnet, daß der Antrieb entweder als am Gegengewicht (3) befestigter Zahnstangenantrieb (7 - 12) bzw. Reibradantrieb oder als an der Kabine (1) oder am Gegengewicht (3) befestigter Treibscheibenantrieb (15, 16) ausgebildet ist, der auf ein im Schacht fest, aber gegebenenfalls lösbar angebrachtes Treibseil (14) wirkt.

Statt Seilen können auch Ketten verwendet werden.

## Beschreibung

Die Erfindung betrifft einen Aufzug mit einer Kabine, die entweder mittels eines über zumindest eine ortsfeste Umlenkrolle geführten Seiles mit einem Gegengewicht verbunden ist und/oder bei dem die Kabine mit einem endlosen Seil verbunden ist, das über zumindest zwei ortsfeste Umlenkrollen geführt ist, wobei in beiden Fällen der Antrieb beweglich angeordnet ist.

Ein derartiger Aufzug, bei dem derAntrieb am kabinenboden angeordnet ist und bei dem Zahnräder des Antriebes mit Zahnstangen, die ortsfest im Aufzugschacht angeordnet sind, kämmen, ist aus der US-PS 571 864 aus dem Jahre 1896 bekannt. Ähnliche Konstruktionen sind in der US-PS 548 752 und der US-PS 1 844 133 beschrieben. Der Hauptgrund dafür, den Antriebsmotor des Aufzugs an der Kabine zu montieren, wardie leichtere Steuerung des Motors durch den Fahrstuhlführer von der Kabine aus.

Da das Gewicht des Antriebsmotors durchaus bedeutend ist und die freihängende Zufuhr des Antriebsstromes sich in der Praxis als bedenklicher und gefährlicher herausstellte als die freihängende Anordnung der Steuerkabel, haben sich derartige Aufzüge in der Praxis nicht durchgesetzt, obwohl sie gegenüber herkömmlichen Aufzügen den großen Vorteil haben, kein Maschinenhaus zu benötigen, was in den letzten Jahren, insbesonders beim nachträglichen Einbau von Aufzügen in bereits bestehende Häuser von großer Bedeutung ist, wie aus derAT-PS 375 056 und der WO 84/00743, entsprechend der EP-B 0 115 482 hervorgeht.

Bei den Versuchen, den Aufzug mit Zahnstangenantrieb in der Praxis kommerziell auszuführen, hat sich gezeigt, daß die Anbringung des Antriebes an der Kabine zu Lärm- und Vibrationsproblemen führt, die die Benutzer und die Hasbewohner trotz der mit diesen Konstruktionen erzielbaren Vorteile nicht hinzunehmen bereit sind.

Aus der der EP-A 0 330 809 entsprechenden AT-PS 389 688 ist weiters ein Aufzug bekannt, der einen Antrieb aufweist, der ähnlich den Zahnstangenantrieben ist, aber mit Reibungsschluß das Auslangen findet und so die Vibrations- und Geräuschentwicklung verringert. Nachteilig ist, daß dieser Antrieb auf die unvermeidlichen Schwerpunktverlagerungen im Betrieb besonders sensibel reagiert, sodaß er sich in der Praxis nicht durchsetzen konnte.

Es ist somit Aufgabe der Erfindung, einen Aufzug der eingangs genannten Art zu schaffen, der die genannten Nachteile nicht aufweist, die Vorteile dieser Gattung von Aufzügen aber weiterhin beibehält.

Erfindungsgemäß geschieht dies dadurch, daß der Antrieb entweder als am Gegengewicht befestigter Zahnstangenantrieb bzw. Reibradantrieb oder als an der Kabine oder am Gegengewicht befestigter Treibscheibenantrieb ausgebildet ist, der auf ein im Schacht fest, aber gegebenenfalls lösbar angebrachtes Seil wirkt.

Durch die erfindungsgemäßen Maßnahmen ist es im ersten Falle möglich, das Kabinengewicht zu verringern und die Zahnstange dem Gegengewicht zuzuordnen, was die überraschenden Vorteile mit sich bringt, daß die dort auftretenden Erschütterungen und Vibrationen einerseits durch das fixe Gewicht und die fixe Schwerpunktlage des Gegengewichtes geringer als bei derAntriebsanordnung an der Kabine ausfallen und daß zweitens die noch auftretenden, minimalen Geräusche den Komfort der Fahrgäste in der Kabine und die Benutzer des Gebäudes nicht stören. Die verringerten Vibrationen können durch die bevorzugt isolierend befestigten Zahnstangen von der Gebäudestruktur ferngehalten werden.

Bei Verwendung eines Treibscheibenantriebes wird dieser vorteilhafterweise ebenfalls am Gegengewicht angeordnet, doch ist dies zufolge der Geräusch- und Vibrationsarmut dieses Antriebes nicht notwendig. Es ist möglich, das Treibseil im Schacht endlos anzuordnen und an zumindest einer Stelle mittels einer Bremse oder klemme zu fixieren, was bei einer erfindungsgemäßen Ausgestaltung einer Notbefreiungsvorrichtung Vorteile mit sich bringt.

Es hat sich völlig unerwartet gezeigt, daß die durch diese Erfindung erreichten Vorteile eines leisen und vibrationsarmen Betriebes auch dann erhalten bleiben, wenn statt des Seiles und dem Seiltrieb eine Kette und ein Kettentrieb, z.B. Kettenräder, verwendet werden. Es werden daher in dieser Beschreibung und den Patentansprüchen unter den Begriff "Seil" sowohl Seile als auch Ketten subsummiert.

Zusätzliche Vorteile der kette gegenüber dem Seil liegen im formschlüssigen Antrieb und der erleichterten Befestigung der Kette im Schacht.

Bei allen erfindungsgemäßen Antriebsvarianten ist es möglich, die Kabine in herkömmlichen Führungen zu führen und mit den herkömmlichen Sicherheitseinrichtungen zu versehen.

In der Beschreibung und den Ansprüchen wird verschiedentlich von einem "Schacht" gesprochen. Damit ist aber, beispielsweise bei sogenannten Panoramaliften, nur der von der Kabine bzw. dem Gegengewicht durchfahrene Bereich gemeint.

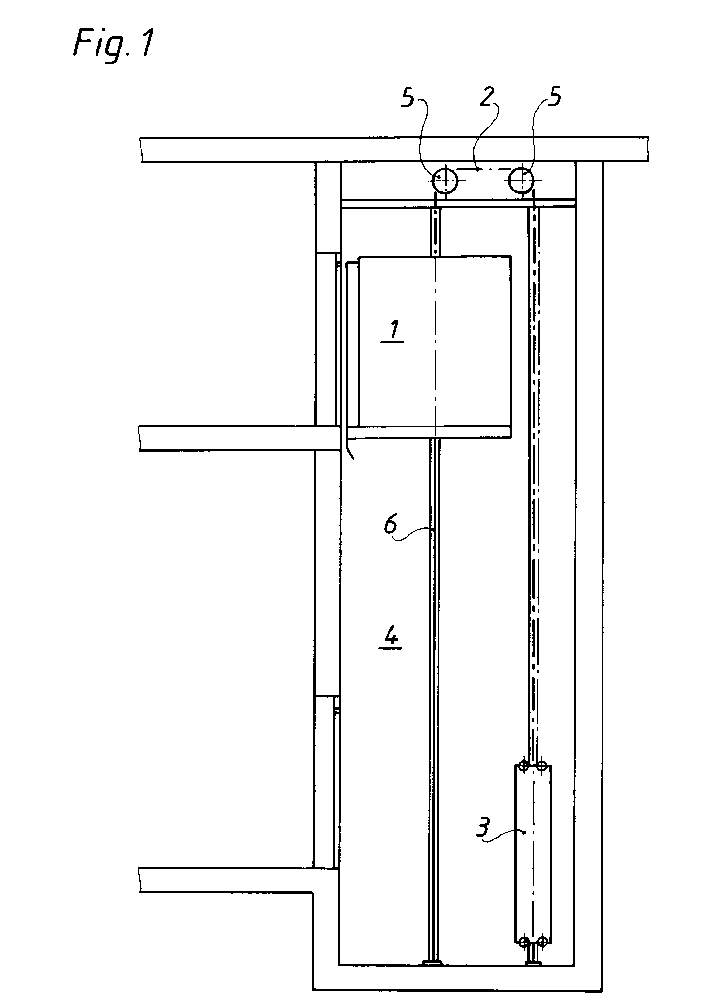

Die Erfindung wird an Hand der Zeichnung näher erläutert. Dabei zeigt die Fig. 1 einen erfindungsgemäßen Aufzug, bei dem das Gegengewicht einen Zahnstangenantrieb trägt, in Seitenansicht.

Die Fig. 2 zeigt eine Draufsicht auf den Aufzug gemäß Fig. 1 mit entferntem Seil.

Die Fig. 3, 4 und 5 zeigen erfindungsgemäße Ausführungsvarianten mit Treibscheibenantrieb in Seitenansicht analog zur Fig. 1.

Fig. 1 zeigt eine Kabine 1, die mittels eines Seiles 2 mit einem Gegengewicht 3 verbunden ist. Das Seil 2 läuft am oberen Ende des Schachtes 4 um zwei Umlenkrollen 5.

Die Kabine 1 wird mittels bekannter Führungen an Führungsschienen 6 geführt und verfügt über alle am jeweiligen Montageort behördlich vorgeschriebenen Sicherheitseinrichtungen, die dem Fachmann wohlbekannt sind und daher hier nicht näher erläutert werden.

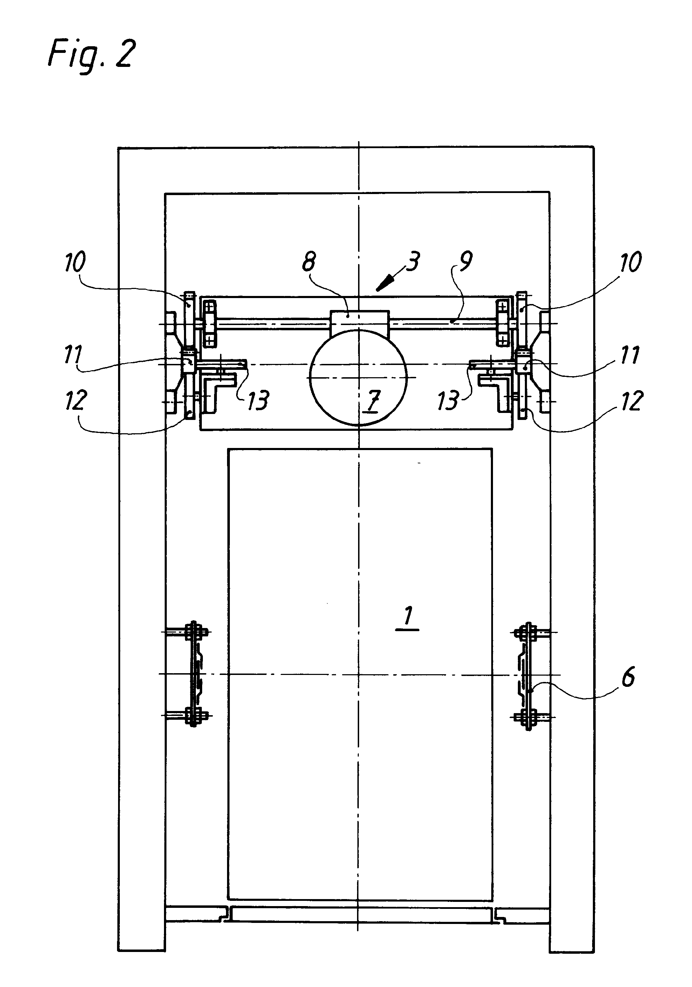

Wie aus Fig. 2 ersichtlich, befindet sich im oberen Bereich des Gegengewichtes 3 der Antrieb für das Gegengewicht und somit für die Kabine. Ein Motor 7 treibt über ein Getriebe 8 und eine Welle 9 zwei Zahnräder 10, deren Zähne mit Zähnen von Zahnstangen 11 kämmen.

Im gezeigten Ausführungsbeispiel sind die Zahnstangen 11 nur einseitig mit Zähnen versehen und parallel und gleichsinnig zueinander angeordnet. Um einen sicheren Zahneingriff zu gewährleisten, sind Anpreßrollen 12 so am Gegengewicht 3 angeordnet, daß sie an der glatten Seite der Zahnstangen 11 entlang rollen und so ein Aufklettern derZähne derZahnräder 10 auf die Zähne der Zahnstangen 11 verhindern. Zur Führung in der Querrichtung sind Führungsrollen 13 am Gegengewicht vorgesehen, die mit einer entsprechenden Lauffläche der Zahnstange 11 in Kontakt stehen.

Es ist selbstverständlich möglich, die Zahnstangen 11 anders auszubilden, z.B. an beiden Seiten mit Zähnen zu versehen und statt der Führungsräder 12 ebenfalls Zahnräder anzuordnen, die gegebenenfalls ebenfalls angetrieben sind. Es ist auch möglich, die Zahnstangen 11 so zu montieren, daß die Zähne zueinander zeigen, sodaß die Räder 13 mit einer Zahnung zu versehen wären und die Räder 10 und 12 als Führungsrollen dienen. Auch wenn alle diese Varianten und noch andere möglich sind, wird die gezeigte wegen der einfachen Getriebekonstruktion und der erleichterten Montage der Zahnstange 11 bevorzugt.

Die Zufuhr der Antriebsenergie und der Steuersignale zum Motor 7 erfolgt auf übliche Weise durch im Schacht 4 hängende Kabel, die dem Fachmann wohlbekannt sind und daher, ebenso wie die Steuerung selbst, nicht näher erläutert oder dargestellt werden.

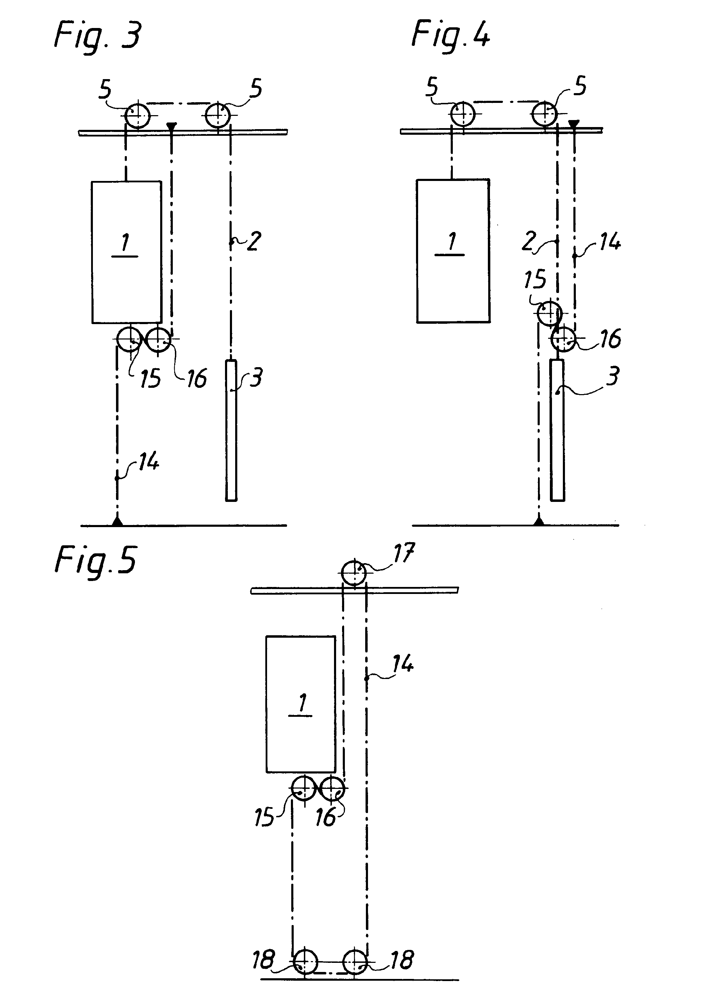

Die Fig. 3 bis 5 zeigen die Varianten der Erfindung, bei denen ein Treibscheibenantrieb verwendet wird.

Beim Treibscheibenantrieb umschlingt ein mit seinen beiden Enden im Schacht fix befestigtes Seil eine antreibbare Scheibe, sodaß beim Verdrehen der Scheibe durch die Reibung zwischen Scheibe und Seil die Lage der Scheibenachse verschoben wird.

In Fig. 3 ist derAntrieb am Boden der Kabine 1 befindlich eingezeichnet. Ein Treibseil 14 ist mit seinen beiden Enden so am Boden bzw. der Decke des Schachtes befestigt, daß es mit dem überwiegenden Teil seiner Länge vertikal verläuft, wobei es eine solche Länge aufweist, daß es einerseits um eine Führungsscheibe 15 und andererseits um die Treibscheibe 16 geschlungen und sodann straff ist. Zum Ausgleich von Längenänderungen, wie sie durch Temperaturänderungen etc. entstehen können, sind die Führungsscheibe 15 und die Treibscheibe 16 so an der Kabine 1 verschwenkbar oder verschieblich befestigt, daß das Seil 14 durch das Gewicht der Kabine 1 gespannt gehalten wird.

Die Kabine 1 und das Gegengewicht 3 ist in allen dargestellten Fällen analog wie in Fig. 1, 2 gezeichnet, geführt, wobei im vorliegenden Auführungsfall die Führung des Gegengewichtes 3 durch den Wegfall der Zahnstange weiter vereinfacht wird.

Es kann statt des Gewichtes der Kabine 1 auch eine Federkraft zwischen den Rollen 15, 16 vorgesehen sein, um das Seil 14 gespannt zu halten.

Beim Verdrehen der Rolle 16 durch einen nicht dargestellten Motorverhindert die durch den Umlenkwinkel des Seiles 14 um die Rolle 16 beträchtliche Seilreibung ein Rutschen zwischen der Scheibe 16 und dem Seil 14, wodurch sich die Rolle am Seil ab- bzw. aufrollt und die Lage ihrer Achse und somit die Lage der Kabine 1 im Schacht verändert.

Analog funktioniert die Vorrichtung gemäß der Fig. 4, wobei durch die das Anbringen des Antriebes und der beiden Rollen 15,16 am Gegengewicht 3 die Masse der Kabine 1 und somit auch die Masse des Gegengewichtes 3 kleiner wird, was die benötigte Leistung für die Beschleunigung des Systems verringert. Da im allgemeinen die Masse G des Gegengewichts mit G = K + L/2 gewählt wird, wobei K die Masse der Kabine und Ldie zuläßige Nutzlast (in gleichen Einheiten, z.B. kg) ist, ist die notwendige Leistung für das Heben nur von der zuläßigen und der Tatsächlichen Nutzlast abhängig (durch die Reibung spielt aber auch hier die Gesamtmasse des Systemes eine Rolle). Bei rasch beschleunigenden Liften istaberdie Beschleunigungsarbeit wesentlich.

Eine Variante des Aufzuges gemäß Fig. 3 ist in Fig. 5 dargestellt. Das Treibseil 14 ist dabei um eine obere Umlenkrolle 17 und zwei untere Umlenkrollen 18 geschlungen und endlos ausgebildet. Die obere Umlenkrolle 17 ist gebremst und verhindert im gebremsten Zustand jede Bewegung des Treibseiles 14 im Schacht.

Der Antrieb mit der Führungsscheibe 15 und der Treibscheibe 16 funktioniert so, wie es an Hand der Fig. 3 beschrieben wurde und braucht nichtweitererwähnt zu werden. Der Sinn derAusbildung des Treibseiles 14 als endloses Seil liegt in der Möglichkeit, eine besonders einfache Notbefreiungsvorrichtung vorsehen zu können.

Diese Notbefreiungsvorrichtung, die bei Ausfall des Antriebes der Treibscheibe 16 die Bewegung der Kabine 1 bis zur nächsten Station ermöglicht, besteht aus einem einrückbaren, hochuntersetzten Antrieb für die Umlenkrolle 17, der selbsthemmend ausgeführt ist und nach dessen Einrücken und dem Lösen der Bremse der Rolle 17 ein Bewegen der Kabine 1 auch bei ausgefallenem Antrieb möglich wird.

Bei dem in Fig. 5 dargestellten Aufzug ist auf das Anbringen eines Gegengewichtes verzichtet worden, doch ist es selbstverständlich möglich, auch bei einem derartigen Aufzug ein Gegengewicht vorzusehen, durch das sowohl der Leistungsbedarf des Antriebes für die Rolle 16 als auch die Übersetzung für den Notantrieb der Rolle 17 reduziert wird.

Bei den anderen in den Figa. 1 bis 4 dargestellten Aufzügen kann eine Notbefreiung bei Ausfall der Antriebskraft durch händisches Betätigen zumindest einer der Umlenkrollen 5 erfolgen. Die Ausführungsformen gemäß den Fig. 3 und 4 erlauben es im Gegensatz zum Stand der Technik und im Gegensatz der Ausführungsform gemäß der Fig. 1 und 2 eine Notbefreiung auch dann vorzunehmen, wenn derAntrieb, beispielsweise durch Bruch des Getriebes, blockiert. Es ist in diesem Falle nur notwendig, die Verankerung des Treibseiles 14 am Schachtboden und/oder an der Schachtdecke zu lösen, worauf durch das Verdrehen der Umlenkrolle(n) 5 nicht nur die Kabine 1 samt Gegenseil 2 und Gegengewicht 3, sondern auch mit dem Treibseil 14 gehoben oder gesenkt wird, bis sie in die nächste Station gelangt.

Es ist selbstverständlich auch möglich, die Ausführungsformen gemäß den Fig. 3 und 4 mit einem Treibseil gemäß Fig. 5 auszurüsten, was ein Lösen des Treibseiles aus seiner Verankerung auch bei blockierendem Ausfall des Antriebes überflüssig macht. Es kann in diesem Fall natürlich auch die Notbefreiungsvorrichtung auf das Gegenseil wirken, wenn nur die Treibseilfixierung aufgehoben wird.

## Patentansprüche

1. Aufzug mit einer Kabine, die entweder mittels eines über zumindest eine ortsfeste Umlenkrolle geführten Seiles mit einem Gegengewicht verbunden ist und/oder bei dem die Kabine mit einem endlosen Seil verbunden ist, das über zumindest zwei ortsfeste Umlenkrollen geführt ist, wobei in beiden Fällen der Antrieb beweglich angeordnet ist, dadurch gekennzeichnet, daß der Antrieb entweder als am Gegengewicht befestigter Zahnstangenantrieb (7 - 12) bzw. Reibradantrieb oder als an der Kabine oder am Gegengewicht befestigter Treibscheibenantrieb (15, 16) ausgebildet ist, der auf ein im Schacht angebrachtes Treibseil (14) wirkt.

2. Aufzug nach Anspruch 1 mit einem Treibscheibenantrieb, dadurch gekennzeichnet, daß das Treibseil (14) endlos ausgebildet und an zumindest einer Stelle mittels einer Bremse oder Klemme fixiert ist.

3. Aufzug nach Anspruch 1 mit einem Gegengewicht (3) und einem Treibscheibenantrieb (15,16), dadurch gekennzeichnet, daß das Treibseil (14) lösbar im Schacht angebracht ist und daß als Notbefreiungsvorrichtung ein händisch oder mittels eines Notenergiespeichers betätigbarer Antrieb der Umlenkrolle (5) vorgesehen ist.

4. Aufzug nach einem der Ansprüche 1 oder 2, dadurch gekennzeichnet, daß als Notbefreiungsvorrichtung ein händisch oder mittels eines Notenergiespeichers betätigbarer Antrieb der Umlenkrolle (5) vorgesehen ist.

5. Aufzug nach Anspruch 2, dadurch gekennzeichnet, daß als Notbefreiungsvorrichtung ein händisch oder mittels eines Notenergiespeichers betätigbarer Antrieb der Umlenkrolle (17) vorgesehen ist.
